# EUROPÄISCHE PATENTSCHRIFT

(11) **EP 3 186 543 B1**
(45) Veröffentlichungstag und Bekanntmachung des Hinweises auf die Patenterteilung: **03.07.2019**
(21) Anmeldenummer: 15762504.7
(22) Anmeldetag: 25.08.2015
(51) Int. Cl.: F21S 8/06, F21V 7/04, F21V 8/00

(54) **RAHMENLOSE PENDELLEUCHTE**
FRAMELESS PENDANT LAMP
LUMINAIRE SUSPENDU SANS CHÂSSIS

(30) Priorität: 28.08.2014 DE 202014104031 U
(43) Veröffentlichungstag der Anmeldung: 05.07.2017
(73) Patentinhaber: Zumtobel Lighting GmbH, 6850 Dornbirn (AT)
(72) Erfinder: FEUERLE, Helmut, A-6934 Sulzberg (AT)
(74) Vertreter: Kiwit, Benedikt
(86) Internationale Anmeldenummer: PCT/EP2015/069432
(87) Internationale Veröffentlichungsnummer: WO 2016/030364

(56) Entgegenhaltungen:
- EP-A1- 2 014 974
- EP-A1- 2 163 701
- EP-A1- 2 559 932
- EP-A1- 2 696 226
- WO-A1-2014/120925
- WO-A2-2014/120915
- US-A1- 2009 174 300
- US-A1- 2011 063 855
- US-A1- 2012 069 579

## Beschreibung

Die vorliegende Erfindung betrifft eine Leuchte, insbesondere eine Pendelleuchte, entsprechend dem Oberbegriff des Schutzanspruchs 1 mit einer Haltevorrichtung, zumindest einem Leuchtmittel und einer flächigen Lichtplatte.

Derartige Leuchten sind beispielsweise aus der WO 2014./008614 A1 bekannt. Dabei wird ein Leuchtmittel, beispielsweise eine lichtemittierende Diode, kurz LED, an eine äußere Stirnseite der Lichtleitplatte angeordnet. Das von der LED emittierte Licht wird aufgrund der stirnseitigen Anordnung direkt in die Lichtleitplatte eingekoppelt und in einem anderen Bereich der Lichtleitplatte zum Zweck der Beleuchtung eines Arbeitsplatzes wieder ausgekoppelt. Um die Leuchte optisch ansprechend zu gestalten, wird das Leuchtmittel in aller Regel kaschiert. Dies erfolgt zumeist mit Hilfe eines Rahmens an der Stirnseite, wobei der Rahmen entweder umlaufend entlang aller Stirnseiten der Lichtleitplatte oder entlang lediglich einer Stirnseite angeordnet ist.

EP 2 163 701 A1 zeigt ein System zur Aufhellung einer Decke eines Raumes mit mehreren Leuchtmodulen, welche jeweils ein plattenförmiges Lichtabstrahlelement sowie eine dem Lichtabstrahlelement zugeordnete, im Wesentlichen punktförmige Lichtquelle aufweisen. Das Licht der Lichtquelle wird an einer Seite in das Lichtabstrahlelement eingekoppelt und über eine Flachseite des Lichtabstrahlelementes flächig abgestrahlt.

US 2012/0 069 579 A1 offenbart eine Lichtleitstruktur, in die Licht einer Lichtquelle über einen an der Unterseite der Lichtleitstruktur vorgesehenen Schlitz eingekoppelt wird. Die Lichtleitstruktur weist auf ihrer Oberseite Mikrostrukturen auf, mittels denen das Licht gleichförmig aus der Lichtleitstruktur ausgekoppelt wird.

WO 2014/120915 A2 offenbart eine Leuchte gemäß dem Obergriff des Anspruchs 1.

Die stirnseitige Platzierung der Leuchtmittel ist problematisch, da das Leuchtmittel dort weitestgehend ungeschützt ist. Auch die elektrische Ansteuerung der stirnseitig platzierten Leuchtmittel ist problematisch. Weiterhin ist es wünschenswert, die Gestalt bzw. das optische Erscheinungsbild derartiger Leuchten weiter zu verbessern, sodass auf das Ausbilden des Rahmens an der Lichtleitplatte verzichtet werden soll.

Es ist daher eine Aufgabe der vorliegenden Erfindung, eine Leuchte mit einer rahmenlosen Lichtleitplatte bereitzustellen. Die Leuchtmittel der Leuchte sollen einfach elektrisch versorgbar sein. Die Leuchte soll kostengünstig herstellbar und energieeffizient sein. Die Leuchte soll überdies robust sein. Die Leuchtmittel in der Leuchte sind besser vor Umwelteinflüssen zu schützen.

Diese Aufgabe wird durch eine Leuchte gemäß Schutzanspruch 1 gelöst. Vorteilhafte Weiterbildungen der Erfindung sind Gegenstand der abhängigen Schutzansprüche.

Erfindungsgemäß wird die gestellte Aufgabe durch eine Leuchte, insbesondere eine Pendelleuchte gelöst. Die Leuchte weist eine Haltervorrichtung zum Halten der Leuchte, zumindest ein Leuchtmittel zum Emittieren von Licht und eine flächige Lichtleitplatte auf, wobei die Lichtleitplatte das emittierte Licht des zumindest einen Leuchtmittels leitet und abstrahlt. Eine flächige Seite der Lichtleitplatte weist eine Kavität auf, wobei das Leuchtmittel derart angeordnet ist, dass es innerhalb dieser oder (vorzugsweise nur) in diese Kavität abstrahlt und vorzugsweise in dieser Kavität das Leuchtmittel angeordnet ist. Ferner ist an oder in dieser Kavität die Haltevorrichtung angeordnet.

Erfindungsgemäß wird als Leuchte insbesondere eine Pendelleuchte verwendet, wobei die Leuchte mittels der Haltevorrichtung an einer Raumdecke oder Raumwand befestigt ist, wodurch die Leuchte gehalten wird. Alternativ sind als erfindungsgemäße Leuchten beispielsweise auch Wandleuchten, Stehleuchten oder Deckenleuchten vorgesehen.

Als Leuchtmittel kommen vorzugsweise LEDs zum Einsatz, jedoch ist die Erfindung darauf nicht beschränkt. Jegliches andere (punktförmige) Leuchtmittel, beispielsweise eine (in kompakter Bauweise ausgestaltete) Glühlampe, Halogenlampe oder eine Laserdiode und dergleichen können als erfindungsgemäßes Leuchtmittel dienen. Das Leuchtmittel emittiert Licht. Licht ist insbesondere der für das Auge sichtbare Teil der elektromagnetischen Strahlung. Im elektromagnetischen Spektrum umfasst der Bereich des Lichts Wellenlängen von etwa 380 Nanometer bis 780 Nanometer. Die an das sichtbare Licht angrenzenden Bereiche der Infrarotstrahlung mit Wellenlängen zwischen 780 Nanometer und 1 Millimeter und Ultraviolettstrahlung mit Wellenlängen zwischen 10 Nanometer und 380 Nanometer werden erfindungsgemäß ebenfalls als Licht angesehen.

Bei der Verwendung von LEDs als Leuchtmittel ist vorzugsweise wenigstens ein Teil einer LED-Ansteuerelektronik in der Leuchte vorsehebar. Die Ansteuerelektronik umfasst insbesondere die Arbeitspunkteinstellung der LED und mögliche Zusatzfunktionen, beispielsweise eine Dimmfunktion. In zweckmäßiger Weise erfolgt dabei das Platzieren der LED sowie der Ansteuerelektronik gemeinsam auf einem Leuchtmittelträger. Der Leuchtmittelträger trägt bevorzugt eine Vielzahl von Leuchtmitteln. In einer bevorzugten Ausgestaltung umfasst der Leuchtmittelträger zusätzlich ein Wärmeableitelement, insbesondere ein Kühlelement, wodurch Beschädigungen von Leuchtmitteln aufgrund hoher Wärmeentwicklung und mangelnder Wärmeabfuhr vermieden sind.

Als eine Lichtleitplatte wird ein Lichtleitelement verstanden, welches Licht in Form von Lichtstrahlen in seinem Inneren transportieren kann. Das Licht wird dabei bevorzugt in das Lichtleitelement eingekoppelt. Das Licht wird weiter bevorzugt aus dem Lichtleitelement wieder ausgekoppelt und strahlt sodann in die Umgebung ab. Bevorzugt erfolgt die Lichteinkopplung in einem ersten Bereich der Lichtleitplatte und die Lichtauskopplung an zumindest einem vom ersten Bereich der Lichtleitplatte verschiedenen zweiten Bereich der Lichtleitplatte. Dieser zweite Bereich ist zumindest Teil einer von außen zugänglichen Seite der Lichtleitplatte, bevorzugt eine flächige Seite und/oder eine von dem Bereich der Lichteinkopplung entfernte Stirnseite der Lichtleitplatte.

Als flächige Lichtleitplatte wird ein Lichtleitelement verstanden, welches ein großes Verhältnis zwischen einer Längserstreckung und einer Dickenerstreckung aufweist, sodass die Platte eine verhältnismäßig große geometrische Grundfläche im Vergleich zu seiner Dicke aufweist. Diese Grundfläche dient bevorzugt der Abstrahlung des ausgekoppelten Lichts.

Eine flächige Seite der Lichtleitplatte ist mit einer Kavität ausgebildet. Bevorzugt ist diese flächige Seite eine von außen zugängliche Oberseite der Leuchte. Bevorzugt ist diese flächige Seite eine zur Wand oder zur Decke zugeneigte flächige Seite der Lichtleitplatte.

Erfindungsgemäß ist das Leuchtmittel derart angeordnet, dass es innerhalb dieser oder in diese Kavität abstrahlt. So wird eine Einkopplung des emittierten Lichts in die flächige Lichtleitplatte auch außerhalb des Randes ermöglicht. Bevorzugt ist hierbei das Leuchtmittel in der Kavität angeordnet. Durch das Anordnen der Kavität in einer flächigen Seite der Lichtleitplatte kann auf eine Anordnung der Leuchtmittel an einer Stirnseite der Lichtleitplatte verzichtet werden. Die Lichteinkopplung erfolgt dabei insbesondere mittels der Kavität der Lichtleitplatte und der entsprechenden Anordnung des Leuchtmittels derart, dass es in die/der Kavität einstrahlt/abstrahlt. Die die Kavität begrenzende Fläche bildet vorzugsweise eine Einkoppelfläche für das von dem Leuchtmittel emittierte Licht in den Lichtleiter. Im Falle einer Pendelleuchte oder Wandleuchte wird somit das Leuchtmittel für einen Benutzer nicht sichtbar; wenigstens kann auf aufwendige Rahmenkonstruktionen vermieden werden. Die Kavität schützt das Leuchtmittel weiterhin vor einem auf die Pendelleuchte einwirkenden Kraftstoß, beispielsweise bei einem unbewussten Zusammenstoßen mit der Leuchte.

Da die Haltevorrichtung an oder in dem Bereich der Kavität vorgesehen ist, kann ohne zusätzliche Bauteile diese sowie ein damit optisch korrespondierendes Leuchtmittel einfach kaschiert werden.

In einer bevorzugten Ausgestaltung ist die Kavität der Lichtleitplatte eine sich im Wesentlichen orthogonal zur flächigen Seite erstreckende Öffnung. Über die Kavität, insbesondere in Form einer durchgehenden Öffnung, kann die Haltevorrichtung mit der Lichtleitplatte mechanisch verbunden sein, um die Leuchte zu halten. Hierzu ist bevorzugt die Lichtleitplatte an der Haltevorrichtung eingehängt. Bevorzugt erfolgt die Lichteinkopplung in die Lichtleitplatte durch Platzieren des Leuchtmittels in der Kavität unterhalb bzw. innerhalb der Haltevorrichtung.

Das Leuchtmittel ist bevorzugt auf einem Leuchtmittelträger angeordnet und zwischen der Haltevorrichtung und der Lichtleitplatte innerhalb oder in Nähe der Kavität angeordnet. Auf diese Weise wird das Leuchtmittel optisch kaschiert und durch Einbringen in die Kavität vor äußeren Einflüssen, insbesondere von außen einwirkenden Kraftstößen an die Leuchte, geschützt. Auf einen äußeren umlaufenden Rahmen kann verzichtet werden, sodass die Leuchte einerseits optisch ansprechender ausgestaltet ist und andererseits vereinfacht aufgebaut werden kann, wodurch Herstellungskosten gespart werden.

In einer bevorzugten Ausgestaltung ist das Leuchtmittel an der Haltevorrichtung vorgesehen bzw. befestigt. Auf diese Weise wird auf eine zusätzliche Halterung für das Leuchtmittel und den Leuchtmittelträger verzichtet und der Aufbau der Leuchte weiter vereinfacht.

Gemäß einem Beispiel ist das zumindest eine Leuchtmittel derart in der Kavität angeordnet bzw. bezüglich dieser vorgesehen, dass dessen Hauptabstrahlrichtung im Wesentlichen parallel zu einer flächigen Seite der Lichtleitplatte bzw. orthogonal zu einer Stirnseite der Lichtleitplatte ist. Das Leuchtmittel (bspw. LED) weist insbesondere eine lichtemittierende Hauptfläche auf, wobei die lichtemittierende Hauptfläche parallel zur Stirnseite der Lichtleitplatte angeordnet wird, sodass das Leuchtmittel hauptsächlich orthogonal zur Stirnseite der Lichtleitplatte bzw. parallel zur flächigen Seite Licht emittiert. Durch dieses Anordnen des Leuchtmittels vorzugsweise innerhalb der Kavität erfolgt somit ein einfaches Einkoppeln des emittierten Lichts in die Lichtleitplatte, indem es direkt senkrecht auf die Innenseite der Kavität strahlt und somit in der Erstreckungsebene der Lichtleitplatte in letztere eingekoppelt wird. Aufwendige Lichteinkoppelmechanismen oder Lichteinkoppelelemente können somit entfallen.

Gemäß der Erfindung ist das zumindest eine Leuchtmittel derart in die Kavität eingebracht bzw. bezüglich dieser vorgesehen, dass dessen Hauptabstrahlrichtung im Wesentlichen parallel zur Stirnseite der Lichtleitplatte bzw. orthogonal zu einer flächigen Seite der Lichtleitplatte ist. Dabei ist das Leuchtmittel mit einer lichtemittierenden Hauptfläche ausgestaltet, wobei diese lichtemittierende Hauptfläche parallel zu einer von außen zugänglichen flächigen Seite (bspw. Lichtauskoppelseite) der Lichtleitplatte angeordnet wird. Dies ermöglicht eine einfache Anordnung des Leuchtmittels innerhalb oder in Nähe der Kavität. Ferner kann mittels eines im Weiteren beschriebenen Lichtumlenkelements auf diese Weise (also Anordnung der Leuchtmittel (bspw. LEDs) 90° zur (Haupt-)Erstreckungsebene der Lichtleitplatte) eine einfache und effiziente Lichtmischkammer gebildet werden.

In einer bevorzugten Ausgestaltung ist die Kavität als Öffnung ausgebildet, wobei die Öffnung mit einem zum Inneren der Lichtleitplatte kleiner werdenden Durchmesser gebildet ist. Damit wird ein weiter vereinfachtes Einkoppeln des emittierten Lichts ermöglicht. Weiter bevorzugt wird der Durchmesser nichtlinear kleiner, wodurch die Kavität gekrümmte Seitenflächen aufweist und die Lichteinkopplung weiter verbessert ist.

In einer bevorzugten Ausgestaltung ist in der Kavität ein Lichtumlenkelement vorgesehen, wodurch das emittierte Licht des Leuchtmittels definiert in die Lichtleitplatte eingekoppelt wird. Das Lichtumlenkelement ist dabei beispielsweise als Reflektor, lichtumlenkende bzw. reflektierende Schicht oder als eine lichtumlenkende Struktur in der Kavität angeordnet. Durch Einbringen des Lichtumlenkelements erfolgt das Einkoppeln des vorzugsweise orthogonal zur flächigen Seite in die oder innerhalb der Kavität emittierten Lichts an den Stirnseiten der Kavität, also den die Kavität begrenzenden Flächen (Einkoppelflächen). Aufgrund des Lichtumlenkelements wird das emittierte Licht in einem Winkel in die Lichtleitplatte eingekoppelt, der das Ausbreiten des Lichts innerhalb der Lichtleitplatte begünstigt.

Insbesondere erfolgt die Ausbreitung des Lichts innerhalb der Lichtleitplatte definitionsgemäß durch Totalreflexion an den inneren flächigen Seiten der Lichtleitplatte, wodurch das Licht zumindest teilweise die Lichtleitplatte nicht an den flächigen Seiten verlässt. In diesem Fall tritt das Licht im Wesentlichen an den Stirnseiten der Lichtleitplatte aus. Um dies zu verhindern, können die Stirnseiten mit einem/r reflektierenden Element oder Beschichtung versehen sein, so dass das die Stirnseiten erreichende Licht zurück in die Lichtleitplatte gelenkt wird und für die Hauptabstrahlung der Leuchte bereitgestellt wird.

In einer bevorzugten Ausgestaltung ist das Lichtumlenkelement bzw. die Lichtleitplatte dergestalt, dass eine gezielte Auskopplung des Lichts über eine flächige Seite (insbesondere die als Hauptabstrahlfläche dienende, der Haltevorrichtung abgewandte flächige Seite) erfolgt. Dies kann bspw. durch entsprechend strukturierte oder mit Lichtbeeinflussungs-Elementen oder Beschichtungen versehenen flächigen Seiten (insbesondere die der Haltevorrichtung zugewandte flächige Seite) erfolgen. Dadurch entsteht vorzugsweise eine diffuse Beleuchtung, die insbesondere für eine Raumbeleuchtung geeignet ist.

Erfindungsgemäß weist das Lichtumlenkelement zumindest eine Krümmung auf. Durch diese Krümmung wird ein homogenes Einkoppeln des emittierten Lichts in die Lichtleitplatte ermöglicht, wodurch eine diffuse Beleuchtung durch an den flächigen Seiten der Lichtleitplatte ausgekoppelten emittierten Lichts erwirkt wird. Alternativ oder zusätzlich wird durch die Krümmung, wenn erwünscht, auch eine Strahlbündelung erwirkt, wodurch ein wenig fokussiertes emittiertes Licht mittels der Krümmung gebündelt wird.

In einer bevorzugten Ausgestaltung weist das Lichtumlenkelement eine lichtbeeinflussende, insbesondere eine reflektierende bzw. lichtumlenkende Beschichtung auf. Derartige Beschichtungen sind beispielsweise Reflektorschichten, die eine spiegelnde Oberfläche des Lichtumlenkelements ermöglichen. Derartige Beschichtungen können durch Aufdampfen, Bekleben oder Bearbeiten des Lichtumlenkelements erhalten werden. Durch diese Beschichtung wird das emittierte Licht des Leuchtmittels in die Lichtleitplatte eingekoppelt, wobei eine vorzugsweise diffuse Beleuchtung ermöglicht wird. Diese Beschichtung erwirkt insbesondere eine effizientere Lichteinkopplung und im Ergebnis das Erhalten einer energieeffizienteren Leuchte. Alternativ ist es zu demselben Zweck auch denkbar, das Lichtumlenkelement aus einem entsprechenden lichtbeeinflussenden Material (bspw. Metall) herzustellen.

In einer bevorzugten Ausgestaltung ist das Lichtumlenkelement als Teil der Haltevorrichtung, bevorzugt als ein integraler Bestandteil der Haltevorrichtung ausgebildet. Somit trägt die Haltevorrichtung einerseits zum Einkoppeln des Lichts in die Lichtleitplatte und überdies auch zum Halten der Lichtleitplatte bzw. indirekt auch der Leuchte an einer Decke oder Wand bei. Beispielsweise kann die Lichtleitplatte an dem als Teil der Haltevorrichtung bereitgestellten Lichtumlenkelement eingehängt werden.

Bevorzugt ist die Kavität eine durchgehende Öffnung durch die Lichtleitplatte, welche im Wesentlichen parallel zu den Stirnseiten bzw. im Wesentlichen orthogonal zu der flächigen Seite der Lichtleitplatte verläuft. Dabei wird das Leuchtmittel beispielsweise von einer der Decke oder der Wand zugeneigten flächigen Seite der Lichtleitplatte in die Kavität eingebracht. Bevorzugt verschließt das Lichtumlenkelement die durchgehende Öffnung an einer der zugeneigten flächigen Seite gegenüberliegenden flächigen Seite (bevorzugt die Hauptabstrahlfläche bzw. -seite) der Lichtleitplatte. Auf diese Weise wird erwirkt, dass das gesamte emittierte Licht in die Lichtleitplatte eingekoppelt wird und durch die Lichtleitplatte verteilt und abgestrahlt wird; insbesondere dann, wenn (der Rest der) Haltevorrichtung die Kavität bzw. Öffnung an der Seite der zugeneigten flächigen Seite ebefalls verschließt. In diesem Fall kann die Lichtleitplatte zwischen Haltevorrichtung und Umlenkelement (letzteres dann als Teil der Haltevorrichtung) eingespannt und somit gehalten werden.

Die Lichtumlenkelemente weisen vorzugsweise eine gebogen bzw. gekrümmte Oberseite auf, sodass das Licht auf die Stirnseiten (Einkoppelflächen) der Kavität umgelenkt und in die Lichtleitplatte gezielt eingekoppelt wird.

Die Geometrie der Lichtumlenkelemente wird durch die Erfindung nicht beschränkt. So kann das Lichtumlenkelement beispielsweise rund oder eckig ausgebildet sein.

Um eine gewünschte bzw. gezielte Abstrahlung der Leuchte zu erwirken, werden die Oberseiten der Lichtleitplatte bevorzugt mittels einer Beschichtung versehen, sodass an den Orten der Beschichtung das emittierte Licht nicht austreten kann und eine Lichtauskopplung gezielt unterbunden ist. An der der Hauptabstrahlfläche abgewandten flächigen Seite des Lichtleitelements können entsprechende Beschichtungen auch zum gezielten Bereitstellen diffus gestreuten Lichts dienen.

Gemäß der Erfindung ist die Kavität als Lichtmischkammer ausgebildet. Beispielsweise bei der Verwendung von verschiedenfarbigen LEDs erfolgt so eine Mischung des Lichts aus unterschiedlichen Wellenlängen. Somit kann beispielsweise ein Weißlicht aus den RGB-LEDs gebildet werden.

In einer bevorzugten Ausgestaltung wird in der Kavität eine entzerrende Struktur ausgebildet. Diese entzerrende Struktur sorgt für eine gleichmäßige Lichteinkopplung und einen gleichmäßigen Farbverlauf, insbesondere bei der Verwendung von einer Mehrzahl von Leuchtmitteln. Eine diffuse Beleuchtung kann damit ebenfalls erwirkt werden.

In einer bevorzugten Ausgestaltung der Erfindung sind in der Kavität Lichtkonversionspartikel eingebracht, welche die Wellenlänge des emittierten Lichts der Leuchtmittel in eine andere Wellenlänge konvertieren. Derartige Lichtkonversionspartikel ermöglichen das Erzeugen von Licht bestimmter Wellenlängen, die nicht mittels der eingesetzten Leuchtmittel erzeugt werden können. Somit können auch kostengünstigere Leuchtmittel eingesetzt werden, welche zunächst Licht einer ungewünschten Wellenlänge emittieren, welches anschließend mittels der Lichtkonversionspartikel in Licht einer gewünschten Wellenlänge konvertiert wird.

Die Haltevorrichtung dient dem Befestigen der Leuchte, insbesondere durch Abhängen oder Aufhängen der Leuchte. In einer bevorzugten Ausgestaltung wird die Haltevorrichtung als Abhäng- oder Aufhängvorrichtung ausgebildet und umfasst zumindest ein Trageelement, an dem die Leuchte gehalten wird. Das Abhäng- oder Aufhängelement dient dabei dem Anbringen der Leuchte an einer Wand oder einer Raumdecke. Das Trageelement ist bevorzugt ein Seil, ein Stab oder eine Schnur, an dem die Leuchte mittels der Haltevorrichtung befestigt ist.

In einer bevorzugten Ausgestaltung weist die Leuchte zumindest zwei Haltevorrichtungen auf, wodurch eine länglich ausgeformte Leuchte ideal befestigt werden kann.

In einer weiter bevorzugten Ausgestaltung weist die Leuchte vier Haltevorrichtungen auf, sodass großflächige Leuchten, beispielsweise runde, viereckige, ovale Leuchten ideal befestigt werden können.

Die Anzahl der Haltevorrichtungen und Trageelemente ist dabei nicht beschränkend. Beispielsweise kann auch eine Mehrzahl von Haltevorrichtungen mit nur einem einzigen Trägerelement verbunden sein.

In einer bevorzugten Ausgestaltung umfasst die Haltevorrichtung auch die Energieversorgung für das zumindest eine Leuchtmittel. In vorteilhafter Weise weisen die Trageelemente, die zum Aufhängen der Pendelleuchte mit der Haltevorrichtung der Leuchte verbunden sind, die Verdrahtung für die zum Betrieb der Leuchtmittel notwendige Energieversorgung und/oder Steuersignale auf. Somit kann auch die Energieversorgung bevorzugt mit dem Tragelement als Einheit ausgebildet sein und somit auch diese kaschiert bereitgestellt werden.

Nachfolgend wird die vorliegende Erfindung anhand von Ausführungsbeispielen unter Bezugnahme auf die beiliegenden Zeichnungen näher beschrieben. Gleiche Bestandteile in den Figuren werden dabei mit gleichen Bezugszeichen versehen. Der Übersichtlichkeit halber sind nicht alle Bezugszeichen in allen Figuren dargestellt. Zur vereinfachten Darstellung können bestimmte Elemente übertrieben groß bzw. übertrieben vereinfacht dargestellt sein.

Es zeigen:
- Fig. 1: einen Querschnitt eines ersten Ausführungsbeispiels einer Leuchte;
- Fig. 2: einen Querschnitt eines zweiten Ausführungsbeispiels einer Leuchte;
- Fig. 3: eine perspektivische Ansicht eines dritten Ausführungsbeispiels einer erfindungsgemäßen Leuchte;
- Fig. 4: einen Querschnitt eines vierten Ausführungsbeispiels einer erfindungsgemäßen Leuchte;
- Fig. 5: einen Querschnitt eines ersten Ausführungsbeispiels eines erfindungsgemäßen Lichtumlenkelements innerhalb einer erfindungsgemäßen Kavität;
- Fig. 6: einen Querschnitt eines zweiten Ausführungsbeispiels eines erfindungsgemäßen Lichtumlenkelements innerhalb einer erfindungsgemäßen Kavität;
- Fig. 7: einen Querschnitt eines fünften Ausführungsbeispiels einer erfindungsgemäßen Leuchte; und
- Fig. 8: einen Querschnitt eines sechsten Ausführungsbeispiels einer Leuchte.

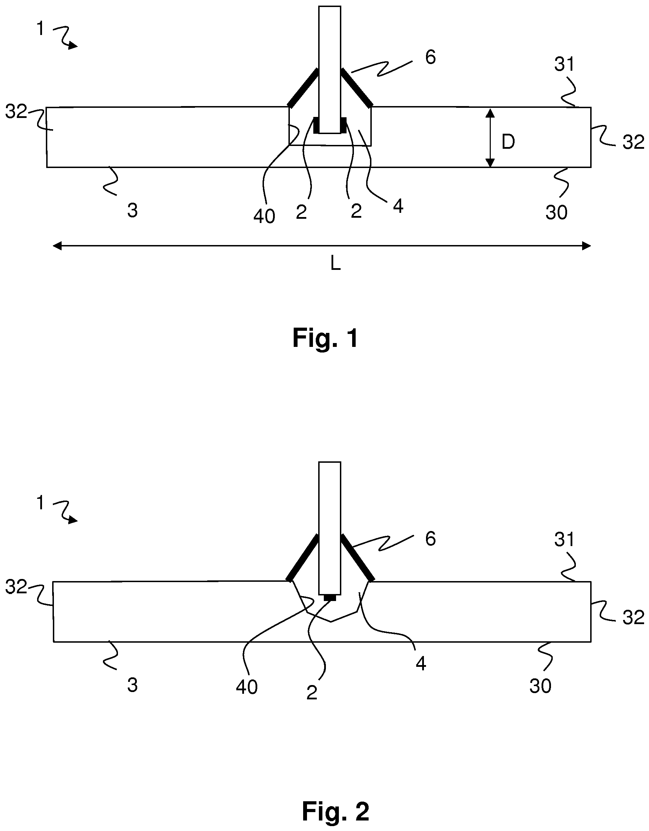

Die, in den Figuren 1, 2 und 8, offenbarten Ausführungsformen sind nicht Teil des Erfindungsgegenstand. Sie sind jedoch nützlich, um die Erfindung zu verstehen. In der Fig. 1 ist ein Querschnitt eines ersten Ausführungsbeispiels einer Leuchte 1 dargestellt. Die länglich ausgebildete Leuchte 1 umfasst insbesondere eine flächige Lichtleitplatte 3. Die Lichtleitplatte 3 weist eine im Verhältnis zur Dicke D wesentlich größere Länge L auf. Die Lichtleitplatte 3 ist an einer Haltevorrichtung 6 befestigt. Die Haltevorrichtung 6 ist an einer Kavität 4 an der flächigen Oberseite 31 der Lichtleitplatte befestigt.

Innerhalb der Lichtleitplatte 3 ist die vorgenannte Kavität 4 eingebracht. Die Kavität 4 ist bevorzugt mittig im Querschnitt angeordnet. Sind mehrere Kavitäten 4 vorhanden, so sind diese vorzugsweise gleichmäßig über die Lichtleitplatte 3 verteilt angeordnet. Sie können bspw. auch an randnahen Bereichen der Lichtleitplatte 3 vorgesehen sein. Die Kavität 4 ist gemäß Fig. 1 eine zu einer Oberseite 31 der Lichtleitplatte 3 hin offene Vertiefung in der Lichtleitplatte 3. Die Vertiefung ist orthogonal zur Längserstreckung der Leuchte 1 ausgebildet.

Die Kavität 4 geht in dem Ausführungsbeispiel gemäß Fig. 1 nicht komplett durch die Lichtleitplatte 3 hindurch. Die Tiefe der Kavität 4 ist variabel und abhängig vom Material der Lichtleitplatte 3. Die Tiefe ist beispielsweise minimal größer als das einzubringende bzw. vorzusehende Leuchtmittel 2. Alternativ ist die Tiefe der Kavität 4 ungefähr die Hälfte der Dicke D der Lichtleitplatte 3.

In der Kavität 4 sind zwei LEDs als Leuchtmittel 2 angeordnet. Die Erfindung ist jedoch nicht auf die Anzahl der Leuchtmittel 2 beschränkt. Die LEDs 2 weisen bevorzugt eine flächige Lichtabstrahlfläche auf. Die LEDs 2 sind derart angeordnet, dass die Hauptabstrahlrichtung der LEDs 2 im Wesentlichen parallel zur flächigen Seite 30, 31 der Lichtleitplatte 3 in der Kavität 4 ist.

Als LED 2 kann eine breitwinklig abstrahlende oder schmalwinklig abstrahlende LED 2 eingesetzt werden. Das von der LED 2 emittierte Licht wird über die Kavität 4 in die Lichtleitplatte 3 eingekoppelt. Hierzu bildet die die Kavität 4 begrenzende Fläche vorzugsweise eine Einkoppelfläche 40 für das von dem Leuchtmittel 2 emittierte Licht in den Lichtleiter 3. Das eingekoppelte Licht wird an den flächigen Innenseiten 30, 31 der Lichtleitplatte 3 in Abhängigkeit des Eintrittswinkels des jeweiligen Lichtstrahls (total-)reflektiert oder an der bzw. einer beliebigen Stelle aus der Lichtleitplatte 3 ausgekoppelt. Letzteres kann vorzugsweise durch entsprechende lichtbeeinflussende Mittel (Beschichtung etc.) gefördert werden. Vorzugsweise bildet die der Haltevorrichtung 6 abgewandte flächige Seite 30 die Hauptabstrahlfläche der Leuchte 1 (Direktbeleuchtung). Alternativ ist es auch denkbar, dass nur die der Haltevorrichtung 6 zugewandte flächige Seite 31 die Hauptabstrahlfläche der Leuchte 1 bildet (Indirektbeleuchtung). Durch diesen Effekt wird eine Leuchte 1 gebildet, die entsprechend der Fläche 31 der Lichtleitplatte 3 ein dezentes Raumlicht erzeugen. Je mehr Lichtstrahlen an der Oberseite 31 ausgekoppelt werden, desto heller wird die Fläche unterhalb der Leuchte 1 bestrahlt. Auch können beide flächigen Seiten 30, 31 der Lichtabstrahlung der Leuchte 1 dienen. Ferner ist es auch denkbar, dass zusätzlich oder alternativ das Licht über die Stirnflächen 32 ausgekoppelt wird. Ist Letzteres jedoch gerade nicht gewünscht, so können die Stirnseiten 32 auch lichtundurchlässig und vorzugsweise reflektierend ausgebildet (beschichtet) sein, so dass das auf die Stirnseiten 32 fallende Licht zurück in die Lichtleitplatte 3 gelenkt und dort zur gewünschten Lichtabgabe bereitgestellt werden kann.

Durch gezieltes Anordnen der LED 2 in oder in Nähe der Kavität 4 bzw. durch gezieltes Ausformen der Kavität 2 kann erwirkt werden, dass das Licht nicht bis zu den Stirnseiten 32 geleitet wird, sondern aufgrund eines veränderten Winkels des Lichtstrahls bereits an dem Bereich des Auftreffens auf die flächige Seite 30, 31 der Lichtleitplatte 3 ausgekoppelt bzw. diffus gestreut wird.

Die Leuchte 1 ist im vorliegenden Fall eine Pendelleuchte, welche mittels der Haltevorrichtung 6 an einer Decke oder einer Wand in einem Raum befestigt ist. Die Leuchte 1 dient dabei als Raumbeleuchtung oder als Arbeitsplatzbeleuchtung. Andere Ausgestaltungen der Leuchte 1 sind nicht ausgeschlossen, insbesondere kann die Leuchte 1 eine Wandleuchte, eine Stehleuchte oder eine Deckenleuchte sein.

In Fig. 2 ist ein zu Fig. 1 alternatives zweites Ausführungsbeispiel einer Leuchte 1 dargestellt. Entgegen der Fig. 1 ist eine LED 2 in der Kavität 4 angeordnet, wobei deren Hauptabstrahlrichtung im Wesentlichen parallel zu den Stirnseiten 32 der Lichtleitplatte 3 ist. Weiterhin ist in Fig. 2 eine alternative Ausformung (Einkoppelfläche 40) der Kavität 4 dargestellt, wobei die Form der Kavität 4 auch in Fig. 1 bzw. die Form der Kavität 4 gemäß Fig. 1 hier verwendet werden könnte. Diese Ausführung gemäß Fig. 2 ermöglicht ein einfaches Einkoppeln des emittierten Lichts vom Leuchtmittel 2 in die Lichtleitplatte 3, wobei sich das Licht in der Lichtleitplatte 3 ausbreitet und an den gewünschten Bereichen zur Auskopplung aus der Leuchte 1 bereitgestellt wird.

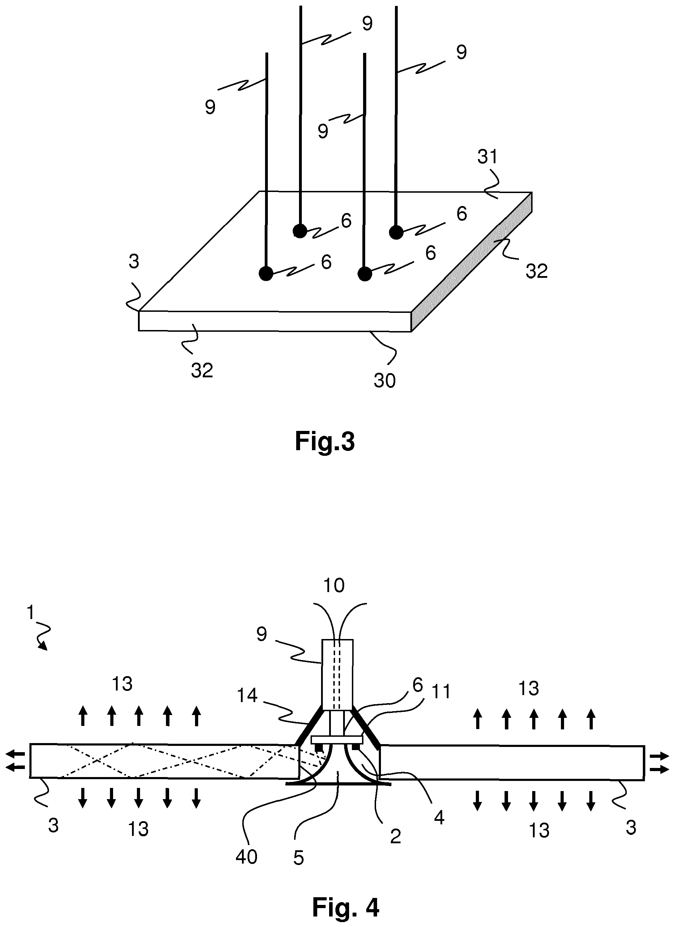

In Fig. 3 ist eine perspektivische Darstellung eines dritten Ausführungsbeispiels einer erfindungsgemäßen Leuchte 1 dargestellt. Hierbei ist die Lichtleitplatte 3 als eine viereckige, insbesondere rechteckige bzw. quadratische Platte, mit Stirnseiten 32 und der zu einer nicht dargestellten Decke zugeneigten flächigen Oberseite 31 sowie einer entsprechenden flächigen Unterseite 30 dargestellt. Die Leuchte 1 weist gemäß Fig. 3 vier Haltevorrichtungen 6 auf. Die Haltevorrichtungen 6 sind hier schematisch dargestellt und entsprechen beispielsweise denen der Figuren 1 und 2. Unterhalb der Haltevorrichtung 6 sind die hier nicht dargestellten Kavitäten 4 angeordnet, in denen oder in deren Nähe die LEDs 2 vorgesehen sind. Jede Haltevorrichtung 6 umfasst gemäß Fig. 3 ein Tragelement 9. Die vier Trageelemente 9 sind gemäß Fig. 3 als Drahtseile ausgebildet. Alternative Aufhäng- bzw. Abhängvorrichtungen 9 sind ebenfalls denkbar, beispielsweise können die Trageelemente 9 stabförmig oder als Schnur ausgebildet sein. Auch ist die Erfindung nicht auf die gezeigte Anzahl beschränkt.

Die Anzahl der Kavitäten 4 innerhalb der Lichtleitplatte 3 ist erfindungsgemäß variabel und kann zur Erzeugung eines speziellen Lichteffekts variieren. So kann beispielsweise vorgesehen sein, dass in einer ersten Kavität 4 der Lichtleitplatte 3 Leuchtmittel 2 angeordnet sind, die Licht einer ersten Wellenlänge emittieren, wohingegen in einer zweiten Kavität 4 der Lichtleitplatte 3 Leuchtmittel 2 angeordnet sind, die Licht einer zweiten Wellenlänge emittieren. Dieses kann sich dann innerhalb der Lichtleitplatte 3 mischen oder an separatn Bereichen der Leuchte 1 zur Erzeugung eines Farbeffektes abstrahlen.

Die Anzahl der LED 2 innerhalb der Kavität 4 ist erfindungsgemäß nicht beschränkt. Es ist beispielsweise vorgesehen, dass zur Erzeugung von Mischlicht zumindest drei LEDs 2 der Farben rot, grün und blau (RGB-LED) enthalten sind. Die LEDs 2 sind insbesondere auf einem Leuchtmittelträger 11 angeordnet, welcher auch die elektronische Ansteuerung der LED 2 umfassen kann, wobei der Träger 11 ebenfalls in bzw. an der Kavität 4 angeordnet sein kann (vgl. Fig. 4).

Eine Steigerung der Effizienz ist erwirkt, wenn die Kavität 4 ausgenommen die Einkoppelfläche 40 mit einem hochreflektierenden Material ausgekleidet ist, beispielsweise durch eine Beschichtung 12 in Form eines Spiegels.

Dieser erfindungsgemäße Aufbau ermöglicht, dass die Lichtleitplatte 3 rahmenlos ausgestaltet sein kann, sodass die Leuchte 1 robuster und optisch ansprechender ausgestaltet sein kann. Die LED 2 in der Nähe oder vorzugsweise innerhalb der Kavität 4 ist für einen Verwender der Leuchte 1 nicht sichtbar und ermöglicht gestalterische Freiheiten bei der Ausformung der Lichtleitplatte 3.

Gemäß Fig. 3 und 4 wird an den Trageelementen 9 auch die Energieversorgung 10 der Leuchtmittel 2 bereitgestellt, beispielsweise durch eine in den Trageelementen 9 verlaufende Verdrahtung 10 (vgl. Fig. 4) oder eine um die Trageelemente 9 verlaufende Verdrahtung.

In der Fig. 4 ist ein Querschnitt eines vierten Ausführungsbeispiels einer erfindungsgemäßen Leuchte 1 dargestellt. Im Wesentlichen Unterschied zu den Fig. 1 und Fig. 2 ist die Kavität 4 als eine durch die Lichtleitplatte 3 komplett durchgehende Öffnung ausgebildet. Diese durchgehende Öffnung kann beispielsweise mittels Bohren oder Fräsen in die Lichtleitplatte 3 eingebracht sein. Das Leuchtmittel 2 ist wiederum in oder in Nähe der Kavität 4 angeordnet, wobei die Hauptabstrahlrichtung der LEDs 2 parallel zu den Stirnseiten 32 der Lichtleitplatte 3 ist.

Die Haltevorrichtung 6 umfasst vorzugsweise das separat oder integral damit ausgebildete Trageelement 9. Eine Energieversorgung 10 der LEDs 2 ist hier innerhalb des Trageelements 9 angeordnet und führt zu dem Leuchtmittelträger 11, welcher die Leuchtmittel 2 und vorzugsweise auch wenigstens einen Teil der elektronischen Ansteuerung für die Leuchtmittel 2 aufweist.

Damit das emittierte Licht in die Lichtleitplatte 3 effizient eingekoppelt wird, kann insbesondere ein Lichtumlenkelement 5 vorgesehen sein. Das Lichtumlenkelement 5 ist eingebracht, um das emittierte Licht der LEDs 2 umzulenken. Entsprechend Fig. 4 wird zur Veranschaulichung im linken Teil der Lichtleitplatte 3 das Ausbreiten der emittierten Lichtstrahlen in Form von gestrichelten Linie dargestellt. Die Lichtausbreitung innerhalb der Lichtleitplatte 3 erfolgt durch Totalreflektion an den inneren Seiten 30, 31 der Lichtleitplatte 3. Es ist bevorzugt möglich, dass bereits an den flächigen Grenzflächen der Lichtleitplatte 3 eine Lichtauskopplung 13 stattfindet. Die Pfeile deuten die Lichtauskopplung 13 aus der Lichtleitplatte 3 an. Gemäß dem Ausführungsbeispiel der Fig. 4 erfolgt die Lichtauskopplung 13 sowohl an der Stirnseite 32 als auch an der flächigen Unterseite 30 und flächigen Oberseite 31 der Lichtleitplatte 3. Wie zuvor bereits erwähnt, kann jedoch auch eine der Seiten 30-32 oder ein Teil derselben als Hauptabstrahlfläche definiert bereitgestellt werden.

Das Lichtumlenkelement 5 ist hier kegelstumpfförmig ausgebildet. Dadurch weist das Lichtumlenkelement 5 gekrümmte Oberseiten auf, die die Lichteinkopplung in die Lichtleitplatte 3 effizienter ausgestalten. Dies dient vorzugsweise auch der Streuung des von dem Leuchtmittel 2 emittierten Lichts und kann für eine diffuse Beleuchtung aufgrund der unterschiedlichen Einkoppelwinkel der einzelnen Lichtstrahlen innerhalb der Lichtleitplatte 3 sorgen.

In Fig. 4 ist das Lichtumlenkelement 5 als ein integraler Bestandteil der Haltevorrichtung 6 dargestellt. Somit dient das Lichtumlenkelement 5 einerseits der Lichteinkopplung und andererseits auch dem Halten der Leuchte 1. Das Lichtumlenkelement 5 ist insbesondere als Gegenstück zur Haltevorrichtung 6 ausgebildet, und fasst die Lichtleitplatte 3 vorzugsweise an den zwei gegenüberliegenden flächigen Seiten 30, 31 im Bereich der Öffnung und letztere auch durchgreifend ein. Die Haltevorrichtung 6 und das Lichtumlenkelement 5 sind hierzu lösbar miteinander verbindbar, beispielsweise als Schraub-, Steck- und/oder Rastverbindung. Alternativ sind die Haltevorrichtung 6 und die Lichtumlenkvorrichtung 5 aus einem Stück gefertigt bzw. unlösbar verbunden. Durch Verbinden der Haltevorrichtung 6 mit dem Trageelement 9, beispielsweise mittels einer lösbaren mechanischen Verbindung, wie einer Schraub-, Steck- und/oder Rastverbindung, erfolgt dann das Halten der Leuchte 1. Die Lichtleitplatte 3 ist gemäß Fig. 4 hierzu an der Haltevorrichtung 6 eingehängt und über die Tragelemente 9 aufgehängt.

Erfindungsgemäß ist somit eine rahmenlose Pendelleuchte hergestellt. Die Lichteinkopplung erfolgt beispielsweise gemäß Fig. 3 an der Lichtleitplatte 3 an den vier Punkten, an denen die Lichtleitplatte 3 auch angehängt ist.

In der Fig. 4 ist überdies eine Abdeckung 14 der Kavität 4 gezeigt, mit der das Leuchtmittel 2, die Kavität 4 und der Leuchtmittelträger 11 vor Feuchtigkeit und Staub geschützt sind. Die Abdeckung 14 ist kegelstumpfförmig und umschließt mit einer Öffnung die Kavität 4 und mit einer weiteren Öffnung das Halteelement 6 oder das Trageelement 9. Die Abdeckung 14 kann als Teil der Haltevorrichtung 6 dem Einfassen bzw. Fixieren der Lichtleitplatte 3 zusammen mit einem korrespondierenden Element (bspw. dem bzgl. der Öffnung gegenüberliegend vorgesehenen Lichtumlenkelement 5) dienen.

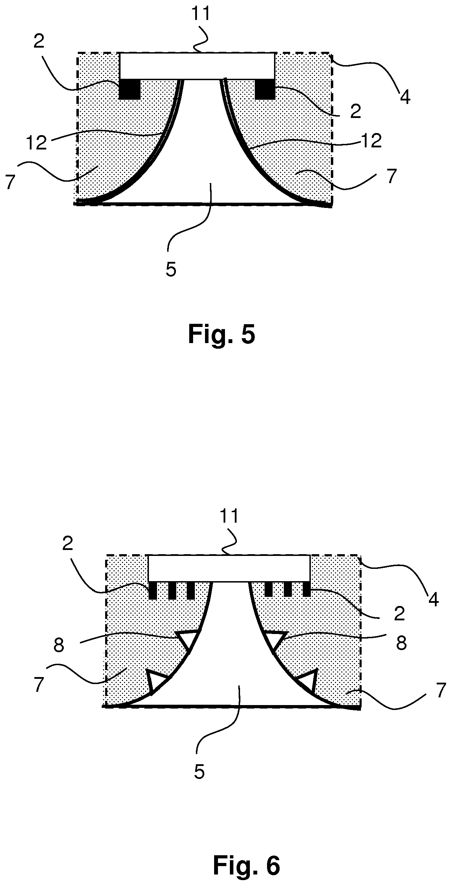

In der Fig. 5 ist ein erfindungsgemäßes Lichtumlenkelement 5 dargestellt. Gemäß der Fig. 5 weist das Lichtumlenkelement 5 eine Beschichtung 12 auf seiner hier gekrümmten Oberseiten auf. Die Beschichtung 12 dient insbesondere der Umlenkung und Streuung der von den LEDs 2 abgestrahlten Lichtstrahlen.

Durch die Krümmung des Lichtumlenkelements 5 wird eine definierte Verteilung bzw. diffuse Streuung des Lichts durch unterschiedliche Ausbreitung von Lichtstrahlen innerhalb der Lichtleitplatte 3 erwirkt. Alternativ kann, wenn gewünscht, auch eine Krümmung vorgesehen sein, um eine Bündelung von Lichtstrahlen des emittierten Lichts des Leuchtmittels 2 zu erwirken.

Das Lichtumlenkelement 5 ist bevorzugt in der Kavität 4 der Lichtleitplatte 3 angeordnet. Ist die Kavität als durchgehende Öffnung gebildet, kann das Lichtumlenkelement 5 die Kavität 4 an einer der flächigen Seiten 30 der Lichtleitplatte 3 verschließen. Ist die Kavität 4 als ,Sackloch' ausgebildet, so kann das Lichtumlenkelement 5 auch in die Kavität 4 einfach eingesetzt sein. In einer alternativen Ausgestaltungsform ist es auch denkbar, dass die Kavität 4 einen entsprechenden konkaven oder konvexen Bodenbereich aufweist, welcher bspw. mittels reflektiver Beschichtung als Reflektor ausgebildet werden kann.

Die Kavität 4 kann zudem als Lichtmischkammer ausgebildet sein. Hierzu kann bereits das Lichtumlenkelement 5 dienen, mittels dem das Licht entsprechend in der die Lichtmischkammer bildenden Kavität 4 vermischt wird. Zudem kann die Kavität 4 beispielsweise mit einem lichtbeeinflussenden Material gefüllt sein. Diesem können Lichtkonversionspartikel 7 zugesetzt sein. Diese Lichtkonversionspartikel 7 setzen das emittierte Licht der Leuchtmittel 2 in ein Licht anderer Wellenlänge um. Dies erwirkt insbesondere, dass Licht einer speziellen Wellenlänge, welches nicht einfach durch Halbleiterprozesse herstellbar ist, u.a. über die Partikel 7 erzeugt wird. Diese Partikel 7 sind beispielsweise einfache Streupartikel. Alternativ oder zusätzlich dazu können Farbkonversionsmaterialien bzw. Phosphormaterial als Partikel 7 in der Lichtmischkammer eingebracht sein.

Die LED 2 kann eine monochromatische LED sein. Beispielsweise kann die LED 2 rotes, grünes oder blaues Licht emittieren. Die Partikel 7 sind bevorzugt aus einem Farbkonversionsmaterial wie z.B. einem Leuchtstoff in Form von fluoreszierenden Teilchen gebildet. Das Farbkonversionsmaterial wird beispielsweise in Kombination mit einer blauen LED 2 verwendet, so dass das Farbkonversionsmaterial das von der LED 2 ausgesendete blaue Licht teilweise absorbiert und gelbes Licht aussendet. Mit anderen Worten wird teilweise blaues Licht in gelbes oder gelbliches Licht umgewandelt.

Alternativ oder zusätzlich dazu kann auch ein Farbkonversionsmaterial 7 benutzt werden, dass das blaue Licht teilweise in grünes bzw. grünliches oder rotes bzw. rötliches Licht umwandelt. Durch Mischung des erzeugten blauen und gelben Lichts entsteht ein mehr oder weniger ausgeprägtes weißes Licht, welches in die Lichtleitplatte 3 eingekoppelt wird.

Das farbkonvertierte Licht, das von den Leuchtstoffteilchen 7 ausgesendet wird, wird in der Lichtmischkammer mit nicht konvertiertem Licht gemischt und über die Einkoppelfläche 40 in die Lichtleitplatte 3 sodann eingekoppelt.

Das Lichtumlenkelement 5 ist insbesondere als ein Kegelstumpf ausgebildet. Da es sich gemäß Fig. 5 um eine Schnittdarstellung handelt, ist hier nicht dargestellt, dass der LED-Träger 11 beispeislweise rund oder eckig ausgeformt ist und mehrere LED 2 beispielsweise ringförmig angeordnet sind, wodurch das emittierte Licht bei einer mittig in der Lichtleitplatte 3 angeordneten Kavität 4 in jede Richtung innerhalb der Lichtleitplatte 3 abgestrahlt wird.

Durch die Lichtmischkammer kann das emittierte Licht vor der Einkopplung in die Lichtleitplatte 3 durchmischt und besser aufgelöst werden.

Gemäß Fig. 6 ist ein zu Fig. 5 weitergebildetes Lichtumlenkelement 5 dargestellt. Hierbei sind entzerrende Strukturen 8 auf der gekrümmten Oberseite des Lichtumlenkelements 5 ausgebildet. Die entzerrenden Strukturen 8 dienen insbesondere dem Erhalten einer diffusen Beleuchtung. In Fig. 6 ist angedeutet, dass eine Vielzahl von LEDs 2 innerhalb der Kavität 4 angeordnet sein können. Die Vielzahl von LEDs 2 können jeweils Licht unterschiedlicher und/oder gleicher Wellenlänge emittieren, sodass mittels der Kavität 4 als Lichtmischkammer beispielsweise eine Rot-Grün-Blau-Mischung innerhalb der Kavität 4 durch die entzerrenden Strukturen 8 und/oder die Lichtkonversionspartikel 7 erwirkt ist. Durch Ausgestalten des Lichtumlenkelements 5 als Kegelstumpf wird ein definiertes Einkoppeln des Lichts über die Einkoppelfläche 40 in die Lichtleitplatte 3 erwirkt. Das Lichtumlenkelement 5 kann rund, eckig - bspw. viereckig - oder auch in einer anderen Form ausgebildet sein.

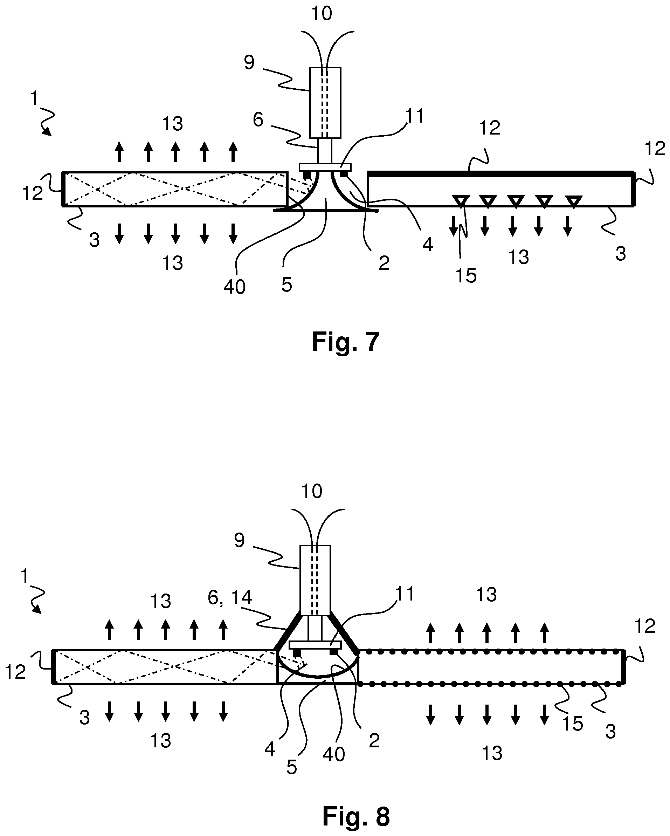

In der Fig. 7 ist ein Querschnitt eines fünften Ausführungsbeispiels einer erfindungsgemäßen Leuchte 1 dargestellt. Im Unterschied zur Fig. 4 ist auf der rechten Seite der Fig. 7 eine Beschichtung 12 dargestellt. Die zur Deckenbefestigung zugeneigte flächige Oberseite 31 und die Stirnseite 32 der Lichtleitplatte 3 sind dabei mittels der Beschichtung 12 ausgebildet. Diese Beschichtung 12 dient dazu, dass in diesen Bereichen der Lichtleitplatte 3 keine Lichtauskopplung 13 erfolgen kann. Die Beschichtung 12 an der flächigen Oberseite 31 kann beispielsweise eine Beschichtung zum diffusen Streuen des auftreffenden Lichtes sein, welches somit über die gegenüberliegende flächige Unterseite 30 aus der Leuchte 1 ausgekoppelt wird. Die Beschichtung an den Stirnseiten 32 kann beispielsweise reflektierend sein, um das dort auftreffende Licht zurück in die Lichtleitplatte 3 zu senden, damit dies vollständig zur Lichtauskopplung an der flächigen Unterseite 30 bereitgestellt ist. Das Licht wird gemäß diesem Beispiel somit lediglich an der unteren Seite 30 der Lichtleitplatte 3 ausgekoppelt werden. Zur Verbesserung der Lichtauskopplung 13 können Lichtauskoppelelemente 15, hier schematisch als Dreiecke dargestellt, in oder an der Lichtleitplatte 3 vorgesehen sein. An diesen Lichtauskoppelelementen 15 werden auftreffende Lichtstrahlen derart umgelenkt, dass diese Lichtstrahlen direkt aus der Lichtleitplatte 3 ausgekoppelt werden. Diese Elemente 15 können mittels Oberflächenbearbeitung oder bei der Herstellung der Lichtleitplatte 3 in die Lichtleitplatte 3 eingebracht werden.

Auf der linken Seite der Leuchte 1 gemäß Fig. 7 ist nur die Stirnseite 32 mit einer (reflektierenden) Beschichtung 12 ausgebildet. Somit kann eine Lichtauskopplung 13 nicht an der Stirnseite 32 erfolgen. Bevorzugt erfolgt die Lichtauskopplung 13 an den beiden flächigen Seiten 30, 31 der Lichtleitplatte 3. Dies ist durch die Pfeile verdeutlicht.

Gemäß Fig. 7 ist auch eine alternative Haltevorrichtung 6 dargestellt. Hierbei ist der Leuchtmittelträger 11 beispielsweise direkt mit der Haltevorrichtung 6 verbunden. Das Lichtumlenkelement 5 ist ein (lösbarer oder unlösbarer) integraler Bestandteil der Haltevorrichtung 6 und dient einerseits zum Einkoppeln des Lichts in die Lichtleitplatte 3 und andererseits zum Befestigen der Leuchte an einer Decke oder einer Wand mittels eines Trageelements 9.

In Fig. 8 ist ein sechstes Ausführungsbeispiel einer Leuchte 1 dargestellt. Dabei ist eine Abdeckung 14 dargestellt, welche den Leuchtmittelträger 11, die Leuchtmittel 2 und auch das Lichtumlenkelement 5 innerhalb der Kavität 4 vor äußeren Einflüssen schützen. Die Abdeckung 14 ist dabei insbesondere staubund/oder wassergeschützt. Die Abdeckung 14 ist mit der Haltevorrichtung 6 gekoppelt und bevorzugt als ein integraler Bestandteil der Haltevorrichtung 6 ausgebildet. Auf der rechten Seite der Fig. 8 ist das Lichtauskoppelelement 15 alternativ zur Fig. 7 ausgebildet. Anstelle der Ausbildung mittels dreieckiger Strukturen erfolgt das Ausbilden der Lichtauskoppelelemente 15 in Fig. 8 beispielsweise mittels einer schematisch dargestellten Beschichtung.

Das Lichtumlenkelement 5 ist in Fig. 8 alternativ ausgestaltet. Es weist eine gekrümmte Oberseite (Einkoppelfläche 40) im Inneren der Kavität 4 auf, wobei die Krümmung zur Mitte der Kavität 4 verläuft. Das Lichtumlenkelement 5 ist dabei entweder direkt aus bzw. in der Lichtleitplatte 3 geformt oder als eigenständiges Bauteil in der Leuchte 1 vorgesehen. Mittels dieses Lichtumlenkelements 5 kann das auf die EInkoppelfläche 40 treffende Licht derart gebrochen werden, dass es definiert in die Lichtleitplatte 3 eingeleitet wird.

Die Erfindung ist nicht auf die beschriebenen Merkmale beschränkt. Insbesondere können beanspruchte oder gezeichnete Merkmale beliebig mit den beschriebenen Merkmalen kombiniert werden. Dies betrifft insbesondere die Kavität 4 sowie die entsprechende Haltevorrichtung 6 und Lichtumlenkelemente 5 mit ihren daran angeschlossenen Elementen und Bestandteilen, welche beliebig miteinander kombinierbar sind. Diesbezüglich sei darauf hingewiesen, dass sich die Erfindung insbesondere auf die Ausgestaltung der verbesserten Lichteinkopplung und Leuchtenaufhängung bezieht. Wie die weitere Ausgestaltung der Lichtleitplatte 3 sowie die entsprechende Lichtlenkung innerhalb derselben sowie die Lichtauskopplung aus derselben vonstattengeht, soll durch diese Erfindung sowie die vorbeschriebenen Ausführungsbeispiele nicht beschränkt sein.

### Bezugszeichenliste

- 1: Leuchte
- 2: Leuchtmittel, LED
- 3: Lichtleitplatte
- 30: Flächige (Unter-)Seite
- 31: Flächige (Ober-)Seite
- 32: Stirnfläche
- 4: Kavität
- 40: Einkoppelfläche
- 5: Lichtumlenkelement
- 6: Haltevorrichtung
- 7: Lichtkonversionspartikel
- 8: Entzerrende Strukturen
- 9: Trageelement
- 10: Energieversorgung
- 11: Leuchtmittelträger
- 12: Umlenkbeschichtung
- 13: Lichtauskopplung
- 14: Abdeckung
- 15: Lichtauskoppelelemente
- D: Dicke
- L: Länge

## Patentansprüche

1. Leuchte (1), insbesondere Pendelleuchte, aufweisend:
- eine Haltevorrichtung (6) zum Halten der Leuchte (1);
- zumindest ein Leuchtmittel (2) zum Emittieren von Licht; und
- eine flächige Lichtleitplatte (3), wobei die Lichtleitplatte (3) das emittierte Licht des zumindest einen Leuchtmittels (2) leitet und abstrahlt;
wobei
- eine flächige Seite (30, 31) der Lichtleitplatte (3) eine Kavität (4) aufweist, wobei das Leuchtmittel (2) derart angeordnet ist, dass es innerhalb dieser oder in diese Kavität (4) abstrahlt und wobei an oder in dieser Kavität (4) die Haltevorrichtung (6) angeordnet ist,
wobei das zumindest eine Leuchtmittel (2) derart in oder in der Nähe der Kavität (4) angeordnet ist, dass dessen Hauptabstrahlrichtung im Wesentlichen parallel zu einer Stirnseite (32) der Lichtleitplatte (3) bzw. im Wesentlichen orthogonal zu einer flächigen Seite (30, 31) ist,
wobei in der Kavität (4) ein Lichtumlenkelement (5) vorgesehen ist, wodurch das emittierte Licht definiert in die Lichtleitplatte (3) eingekoppelt wird, **dadurch gekennzeichnet, dass** das Lichtumlenkelement (5) zumindest eine Krümmung aufweist und als ein integraler Bestandteil der Haltevorrichtung (6) ausgebildet ist.

2. Leuchte gemäß Anspruch 1,
wobei das Leuchtmittel (2) in der Kavität (4) angeordnet ist.

3. Leuchte gemäß Anspruch 1 oder 2,
wobei die die Kavität (4) begrenzende Fläche eine Einkoppelfläche (40) für das von dem Leuchtmittel (2) emittierte Licht in den Lichtleiter (3) ist.

4. Leuchte gemäß einem der vorhergehenden Ansprüche,
wobei die Kavität (4) der Lichtleitplatte (3) eine sich im Wesentlichen orthogonal zur flächigen Seite (30, 31) erstreckende Öffnung, insbesondere eine durch die Lichtleitplatte (3) durchgehende Öffnung, ist.

5. Leuchte gemäß einem der vorhergehenden Ansprüche,
wobei über die Kavität, insbesondere in Form einer durchgehenden Öffnung, die Haltevorrichtung (6) mit der Lichtleitplatte (3) mechanisch verbunden ist, vorzugsweise die Lichtleitplatte (3) an der Haltevorrichtung (6) eingehängt ist.

6. Leuchte gemäß einem der vorhergehenden Ansprüche,
wobei das Leuchtmittel (2) an der Haltevorrichtung (6) vorgesehen ist.

7. Leuchte gemäß einem der vorhergehenden Ansprüche,
wobei die als Öffnung ausgebildete Kavität (4) mit einem zum Inneren der Lichtleitplatte (3) kleiner werdenden Durchmesser gebildet ist, vorzugsweise einem nichtlinear kleiner werdenden Durchmesser.

8. Leuchte gemäß einem der vorhergehenden Ansprüche,
wobei das Lichtumlenkelement (5) eine lichtbeeinflussende, insbesondere eine reflektierende bzw. lichtumlenkende Beschichtung (12) aufweist oder aus einem entsprechenden lichtbeeinflussenden Material hergestellt ist.

9. Leuchte gemäß einem der vorhergehenden Ansprüche,
wobei die Kavität (4) als Lichtmischkammer ausgebildet ist.

10. Leuchte gemäß einem der vorhergehenden Ansprüche,
wobei in der Kavität (4) zumindest eine entzerrende Struktur (8) ausgebildet ist.

11. Leuchte gemäß einem der vorhergehenden Ansprüche,
wobei in der Kavität (4) Lichtkonversionspartikel (7) zum Umsetzen der Wellenlänge des emittierten Lichts der Leuchtmittel (2) in eine andere Wellenlänge eingebracht sind.

12. Leuchte gemäß einem der vorhergehenden Ansprüche,
wobei die Haltevorrichtung (6) als Abhäng- oder Aufhängvorrichtung ausgebildet ist und zumindest ein Trageelement (9) umfasst, an dem die Leuchte (1) gehalten wird.

13. Leuchte gemäß einem der vorhergehenden Ansprüche,
wobei die Leuchte (1) zumindest zwei Haltevorrichtungen (6), bevorzugt vier Haltevorrichtungen (6) aufweist.

14. Leuchte gemäß einem der vorhergehenden Ansprüche,
wobei die Haltevorrichtung (6) eine Energieversorgung (10) für das zumindest eine Leuchtmittel (2) umfasst, wobei die Energieversorgung vorzugsweise mit dem Tragelement als Einheit ausgebildet ist.

## Claims

1. Lamp (1), in particular pendant light, having:
- a holding device (6) for holding the lamp (1);
- at least one lighting means (2) for emitting light; and
- a flat light guide plate (3), wherein the light guide plate (3) directs and radiates the emitted light of the at least one lighting means (2);
- wherein a flat side (30, 31) of the light guide plate (3) has a cavity (4),
wherein the lighting means (2) is positioned in such a way that it radiates inside or into said cavity (4), and wherein the holding device (6) is disposed on or in said cavity (4),
wherein the at least one lighting means (2) is disposed in or in the vicinity of the cavity (4) such that the main radiation direction thereof is substantially parallel to an end face (32) of said light guide plate (3) or substantially orthogonal to a flat side (30, 31),
wherein a light deflecting element (5) is provided in the cavity (4), as a result of which the emitted light is coupled into the light guide plate (3) in a defined manner, **characterized in that** the light deflecting element (5) has at least one curvature and is formed as an integral component of the holding device (6).

2. Lamp according to Claim 1,
wherein the lighting means (2) is disposed in the cavity (4).

3. Lamp according to Claim 1 or 2,
wherein the surface that delimits the cavity (4) is a coupling surface (40) for the light emitted by the lighting means (2) into the light guide (3).

4. Lamp according to any one of the preceding Claims,
wherein the cavity (4) of the light guide plate (3) is an opening that extends substantially orthogonally to the flat side (30, 31), in particular an opening that extends all the way through the light guide plate (3).

5. Lamp according to any one of the preceding Claims,
wherein the holding device (6) is mechanically connected to the light guide plate (3) via the cavity, in particular in the form of a through-opening; the light guide plate (3) is preferably suspended from the holding device (6).

6. Lamp according to any one of the preceding Claims,
wherein the lighting means (2) is provided on the holding device (6) .

7. Lamp according to any one of the preceding Claims,
wherein the cavity (4) formed as an opening is constructed with a diameter that decreases toward the interior of the light guide plate (3), preferably a diameter that decreases in a non-linear manner.

8. Lamp according to any one of the preceding Claims,
wherein the light deflecting element (5) has a light-influencing coating, in particular a reflective or light-deflecting coating (12), or is produced from a corresponding light-influencing material.

9. Lamp according to any one of the preceding Claims, wherein the cavity (4) is configured as a light mixing chamber.

10. Lamp according to any one of the preceding Claims, wherein at least one equalizing structure (8) is configured in the cavity (4).

11. Lamp according to any one of the preceding Claims, wherein light converting particles (7) for converting the wavelength of the emitted light of the lighting means (2) to a different wavelength are incorporated in the cavity (4).

12. Lamp according to any one of the preceding Claims, wherein the holding device (6) is configured as a hanging or suspension device and comprises at least one support element (9) on which the lamp (1) is held.

13. Lamp according to any one of the preceding Claims, wherein the lamp (1)has at least two holding devices (6), preferably four holding devices (6).

14. Lamp according to any one of the preceding Claims, wherein the holding device (6) comprises a power supply (10) for the at least one lighting means (2), wherein the power supply is preferably formed as a unit with the support element.

## Revendications

1. Lampe (1), en particulier lampe à suspension, comprenant :
- un dispositif de support (6) pour le support de la lampe (1) ;
- au moins une source d'éclairage (2) pour l'émission de lumière ; et
- une plaque de guidage de lumière (3) plane, la plaque de guidage de lumière (3) guidant et émettant la lumière émise de l'au moins une source d'éclairage (2) ;
- un côté plat (30, 31) de la plaque de guidage de lumière (3) comprenant une cavité (4),
la source d'éclairage (2) étant disposée de telle façon qu'elle rayonne à ou vers l'intérieur de cette cavité (4) et le dispositif de support (6) étant disposé sur ou dans cette cavité (4),
l'au moins une source d'éclairage (2) étant disposée de telle façon dans ou à proximité de la cavité (4), que sa direction de rayonnement principale est essentiellement parallèle à une face frontale (32) de la plaque de guidage de lumière (3) ou essentiellement orthogonale à un côté plat (30, 31),
la cavité (4) étant munie d'un élément de déviation de lumière (5), à travers lequel la lumière émise est couplée de façon définie dans la plaque de guidage de lumière (3), **caractérisée** en ce l'élément de déviation de lumière (5) comprend au moins une courbure et est formé comme une partie intégrante du dispositif de support (6).

2. Lampe selon la revendication 1,
la source d'éclairage (2) étant disposée dans la cavité (4).

3. Lampe selon la revendication 1 ou 2,
la surface limitant la cavité (4) étant une surface de couplage (40) dans le guide de lumière (3) pour la lumière émise par la source d'éclairage (2).

4. Lampe selon l'une quelconque des revendications précédentes, la cavité (4) de la plaque de guidage de lumière (3) étant une ouverture s'étendant essentiellement orthogonalement au côté plat (30, 31), en particulier une ouverture traversant la plaque de guidage de lumière (3).

5. Lampe selon l'une quelconque des revendications précédentes, le dispositif de support (6) étant connecté mécaniquement à la plaque de guidage de lumière (3), de préférence la plaque de guidage de lumière (3) étant accrochée au dispositif de support (6), au-dessus de la cavité, en particulier sous la forme d'une ouverture contenue.

6. Lampe selon l'une quelconque des revendications précédentes,
la source d'éclairage (2) étant prévue sur le dispositif de support (6).

7. Lampe selon l'une quelconque des revendications précédentes, la cavité (4) formée comme une ouverture étant formée avec un diamètre diminuant vers l'intérieur de la plaque de guidage de lumière (3), de préférence avec un diamètre diminuant de manière non linéaire.

8. Lampe selon l'une quelconque des revendications précédentes, l'élément de déviation de lumière (5) comprenant une couche (12) influençant la lumière, en particulier réfléchissant ou déviant la lumière, ou étant fabriquée à partir d'un matériau influençant la lumière correspondant.

9. Lampe selon l'une quelconque des revendications précédentes, la cavité (4) étant formée comme une chambre de mélange de lumière.

10. Lampe selon l'une quelconque des revendications précédentes,
au moins une structure de correction (8) étant formée dans la cavité (4).

11. Lampe selon l'une quelconque des revendications précédentes,
des particules de conversion de lumière (7) pour la conversion de la longueur d'onde de la lumière émise par la source d'éclairage (2) en une autre longueur d'onde étant introduites dans la cavité (4) .

12. Lampe selon l'une quelconque des revendications précédentes,
le dispositif de support (6) étant formé comme un dispositif d'accrochage ou de suspension et comprenant au moins un élément de support (9) sur lequel la lampe (1) est soutenue.

13. Lampe selon l'une quelconque des revendications précédentes,
la lampe (1) comprenant au moins deux dispositifs de support (6), de préférence quatre dispositifs de support (6).

14. Lampe selon l'une quelconque des revendications précédentes,
le dispositif de support (6) comprenant une alimentation énergétique (10) pour l'au moins une source d'éclairage (2), l'alimentation énergétique étant formée de préférence d'un seul tenant avec l'élément de support.
